# EUROPEAN PATENT APPLICATION

(11) **EP 4 576 596 A1**
(43) Date of publication of application: **25.06.2025**
(21) Application number: 23867197.8
(22) Date of filing: 22.08.2023
(51) Int. Cl.: H04B 3/54, H04L 47/6275

(54) **COMMUNICATION METHOD, AND INVERTER AND SUB-ARRAY CONTROLLER**

(30) Priority: 20.09.2022 CN 202211145917; 03.07.2023 CN 202310807123
(71) Applicant: Huawei Digital Power Technologies Co., Ltd., Shenzhen, Guangdong 518043 (CN)
(72) Inventor: ZHANG, Chunqing, Shenzhen, Guangdong 518129 (CN); MA, Xun, Shenzhen, Guangdong 518129 (CN); WEI, Bingshou, Shenzhen, Guangdong 518129 (CN); YANG, Liping, Shenzhen, Guangdong 518129 (CN)
(74) Representative: Isarpatent
(86) International application number: PCT/CN2023/114133
(87) International publication number: WO 2024/060904

(57) **Abstract**

Embodiments of this application disclose a communication method and apparatus. The method is applied to a first node, a plurality of channels are disposed on the first node, different channels in the plurality of channels respectively carry information of different priorities, and the channel is a physical channel established by using a power line. The method includes: The first node generates a first packet including first information, and sends the first packet to a second node through a first channel, where the first channel is a channel that carries information of a first priority in the plurality of channels, the first priority is a priority of the first information, and the second node establishes a connection to the first node through a power line. In embodiments of this application, information of different priorities may be sent through different channels. Therefore, the information of different priorities may be sent through the different channels at the same time, to shorten waiting time of the information, so as to increase a transmission rate of information in power line communication.

## Description

This application claims priorities to Chinese Patent Application No. 202310807123.5, filed with the China National Intellectual Property Administration on July 3, 2023 and entitled "COMMUNICATION METHOD, INVERTER, AND ARRAY CONTROLLER", and to Chinese Patent Application No. 202211145917.1, filed with the China National Intellectual Property Administration on September 20, 2022 and entitled "COMMUNICATION METHOD AND APPARATUS", both of which are incorporated herein by reference in their entireties.

### TECHNICAL FIELD

Embodiments of this application relate to the field of power line communication technologies, and in particular, to a communication method and apparatus.

### BACKGROUND

To ensure stability of operating of a power line system and maintain a normal frequency and voltage of a power grid, the power line system needs to have a capability of controlling active power and reactive power, that is, quickly and dynamically adjusting active power and reactive power of a power station based on frequency and voltage changes of the power grid. To ensure real-time transmission of such power control information, a rapid communication network needs to be established. Power line carrier (power line carrier, PLC) communication is a power communication system in which a power transmission line is used as a carrier signal transmission medium. Power transmission lines have become necessary infrastructure for power transmission and power consumption in modern society. Therefore, carrier communication based on existing power transmission lines does not additionally increase communication cabling costs, and has advantages such as wide coverage, cost-effectiveness, and reliability.

However, a higher frequency of a carrier signal indicates a larger transmission loss of the signal caused because the signal passes through the power transmission line. Therefore, a low communication frequency band is used in common power line carrier communication, to reduce the transmission loss of the signal. For example, a standard of the G3-PLC Alliance uses a sub-500 kHz communication frequency band, and an international standard, that is, institute of electrical and electronics engineers (institute of electrical and electronics engineers, IEEE) 1901.1 uses a sub-12 MHz communication frequency band. However, if an available spectrum is limited, a communication rate decreases. Therefore, how to ensure rapid transmission of information in the PLC communication has become an urgent technical problem to be resolved.

### SUMMARY

Embodiments of this application disclose a communication method and apparatus, to increase a transmission rate of information in PLC communication.

According to a first aspect, this application discloses a communication method. The communication method may be applied to a first node, or may be applied to a module (for example, a chip) in the first node, or may be applied to a logical module or software that can implement all or some functions of the first node. A plurality of channels are disposed on the first node, different channels in the plurality of channels respectively carry information of different priorities, and the channel herein is a physical channel established by using a power line. The following uses an example in which the method is applied to the first node for description. The communication method may include: The first node generates a first packet, where the first packet includes first information; and sends the first packet to a second node through a first channel, where the first channel is a channel that carries information of a first priority in the plurality of channels, the first priority is a priority of the first information, and the second node establishes a connection to the first node through a power line.

In this embodiment, the plurality of channels are disposed on the first node, and the different channels in the plurality of channels are respectively used to carry the information of different priorities. When priorities of to-be-sent information are different, channels for sending the to-be-sent information may be different. It can be learned that the information of different priorities may be sent through the different channels. Therefore, the information of different priorities may be sent through the different channels at the same time, to shorten waiting time of the information, so as to increase a transmission rate of information in PLC communication.

In a possible implementation, power lines corresponding to different channels in the plurality of channels are different.

In this embodiment, the power lines corresponding to the different channels are different, so that physical isolation between the different channels can be implemented, and mutual interference between the different channels can be reduced, thereby improving reliability of transmission of information.

In a possible implementation, preambles corresponding to different channels in the plurality of channels are different, the first packet may further include a first preamble, and the first preamble is a preamble corresponding to the first channel.

In this embodiment, the different preambles are used for the different channels, so that mutual interference between the different channels can be reduced, thereby improving reliability of transmission of information.

In a possible implementation, the preambles corresponding to different channels in the plurality of channels are orthogonal to each other.

In this embodiment, the preambles used for the different channels are orthogonal to each other, so that mutual interference between the different channels can be further reduced, thereby improving reliability of transmission of information.

In a possible implementation, preambles corresponding to different channels in the plurality of channels are the same, the first packet may further include a second preamble, and the second preamble is a common preamble for the plurality of channels. In a possible implementation, the communication method may further include: determining the first priority based on a priority of the second node and one or more of a delay requirement, a quality of service (quality of service, QoS) level, an information type, and a preset priority that correspond to the first information.

In this embodiment, the first node may determine the first priority based on the priority of a communication peer end, namely, the second node and/or an importance degree of the first information. The importance degree of the first information may be determined based on one or more of the delay requirement (namely, a transmission delay requirement), the QoS level, the information type, the preset priority, and the like that correspond to the first information. In different application scenarios, a user may flexibly adjust, as required, a policy for determining the first priority, to improve a capability and efficiency of adapting to the different application scenarios by a PLC system.

In a possible implementation, the determining, by the first node, the first priority based on a priority of the second node and one or more of a delay requirement, a QoS level, an information type, and a preset priority that correspond to the first information may include: determining the first priority based on the delay requirement and the information type that correspond to the first information. In a possible implementation, the communication method may further include: When a second packet is sent through a second channel, and a priority corresponding to the second channel is lower than a priority corresponding to the first channel, the first node suspends sending of the second packet; and resumes sending of the second packet after the first packet is successfully sent.

In this embodiment, in a case in which high-priority information needs to be sent, sending of low-priority information may be suspended, to ensure reliability of the high-priority information, so as to improve a rate and reliability of transmission of the high-priority information.

In a possible implementation, the communication method may further include: When a third node exists in the second node, and a packet from the third node is received in a first time period after the first packet is sent, the first node retransmits the first packet to the second node through the first channel, where the third node is a node that operates in a half-duplex mode, and the first time period is less than or equal to a time threshold.

In this embodiment, when the first node sends the first packet, if a second node operates in the half-duplex mode and is sending the second packet, the second node cannot receive the first packet. Therefore, the first node may retransmit the first packet, so that all second nodes can receive the first packet.

In a possible implementation, the communication method may further include: retransmitting the first packet to the second node through the first channel when a quantity of acknowledgements (acknowledgements, ACKs) for the first packet is less than a first quantity, where the first quantity is a quantity of second nodes.

In this embodiment, when there is a second node that does not receive the first packet, the first node may retransmit the first packet, so that all second nodes can receive the first packet.

In a possible implementation, when the first priority is greater than or equal to a first threshold, the first channel is a channel that carries highest-priority information in the plurality of channels; or when the first priority is less than a second threshold, the first channel is a channel that carries lowest-priority information in the plurality of channels. The first threshold is greater than or equal to the second threshold.

In this embodiment, the highest-priority information is sent through the channel that carries the highest-priority information on the first node, and the lowest-priority information is sent through the channel that carries the lowest-priority information on the first node. This can ensure that sending of low-priority information does not affect sending of high-priority information, and can increase a transmission rate of high-priority information in PLC communication.

According to a second aspect, this application discloses a communication method. The communication method may be applied to a second node, or may be applied to a module (for example, a chip) in the second node, or may be applied to a logical module or software that can implement all or some functions of the second node. A plurality of channels are disposed on the second node, different channels in the plurality of channels respectively carry information of different priorities, and the channel herein is a physical channel established by using a power line. The following uses an example in which the method is applied to the second node for description. The communication method may include: The second node receives a first packet from a first node through a first channel, where the first channel is a channel that carries information of a first priority in the plurality of channels, the first packet includes first information, the first priority is a priority of the first information, and the first node establishes a connection to the second node through a power line; and processes the first information.

In this embodiment, the plurality of channels are disposed on the second node, and the different channels in the plurality of channels are respectively used to carry the information of different priorities. When priorities of transmitted information are different, channels for receiving the information may be different. It can be learned that the information of different priorities may be transmitted through different channels. Therefore, the information of different priorities may be transmitted through the different channels at the same time, to shorten waiting time of the information, so as to increase a transmission rate of information in PLC communication.

In a possible implementation, power lines corresponding to different channels in the plurality of channels are different.

In this embodiment, the power lines corresponding to the different channels are different, so that physical isolation between the different channels can be implemented, and mutual interference between the different channels can be reduced, thereby improving reliability of transmission of information.

In a possible implementation, preambles corresponding to different channels in the plurality of channels are different, the first packet may further include generation of a first preamble, and the first preamble is a preamble corresponding to the first channel.

In this embodiment, the different preambles are used for the different channels, so that mutual interference between the different channels can be reduced, thereby improving reliability of transmission of information.

In a possible implementation, the preambles corresponding to different channels in the plurality of channels are orthogonal to each other.

In this embodiment, the preambles used for the different channels are orthogonal to each other, so that mutual interference between the different channels can be further reduced, thereby improving reliability of transmission of information.

In a possible implementation, preambles corresponding to different channels in the plurality of channels are the same, the first packet may further include a second preamble, and the second preamble is a common preamble for the plurality of channels.

In a possible implementation, the first priority is determined based on a priority of the second node and one or more of a delay requirement, a QoS level, an information type, and a preset priority that correspond to the first information.

In a possible implementation, that the first priority is determined based on a priority of the second node and one or more of a delay requirement, a QoS level, an information type, and a preset priority that correspond to the first information may include: The first priority is determined based on the delay requirement and the information type that correspond to the first information.

In a possible implementation, the communication method may further include: The second node sends an ACK for the first packet to the first node when the first packet is successfully received.

In this embodiment, after successfully receiving the first packet from the first node, the second node may feed back the ACK to the first node, so that the first node can determine, based on ACKs, whether there is a second node that fails to receive the first packet. When there is a second node that fails to receive the first packet, the first node may retransmit the first packet, so that it can be ensured that all second nodes can receive the first packet.

In a possible implementation, when the first priority is greater than or equal to a first threshold, the first channel is a channel that carries highest-priority information in the plurality of channels, or when the first priority is less than a second threshold, the first channel is a channel that carries lowest-priority information in the plurality of channels. The first threshold is greater than or equal to the second threshold.

In this embodiment, the highest-priority information is received through the channel that carries the highest-priority information on the second node, and the lowest-priority information is received through the channel that carries the lowest-priority information on the second node. This can ensure that receiving of low-priority information does not affect receiving of high-priority information, and can increase a transmission rate of high-priority information in PLC communication.

According to a third aspect, this application discloses a communication apparatus. The communication apparatus may be used in a first node, or may be used in a module (for example, a chip) in the first node, or may be used in a logical module or software that can implement all or some functions of the first node. A plurality of channels are disposed on the first node, different channels in the plurality of channels respectively carry information of different priorities, and the channel herein is a physical channel established by using a power line. The communication apparatus may include:
a processing unit, configured to generate a first packet, where the first packet includes first information; and
a transceiver unit, configured to send the first packet to a second node through a first channel, where the first channel is a channel that carries information of a first priority in the plurality of channels, the first priority is a priority of the first information, and the second node establishes a connection to the first node through a power line.

In a possible implementation, power lines corresponding to different channels in the plurality of channels are different.

In a possible implementation, preambles corresponding to different channels in the plurality of channels are different, the first packet further includes a first preamble, and the first preamble is a preamble corresponding to the first channel.

In a possible implementation, the preambles corresponding to different channels in the plurality of channels are orthogonal to each other.

In a possible implementation, preambles corresponding to different channels in the plurality of channels are the same, the first packet further includes a second preamble, and the second preamble is a common preamble for the plurality of channels.

In a possible implementation, the processing unit is further configured to determine the first priority based on a priority of the second node and one or more of a delay requirement, a QoS level, an information type, and a preset priority that correspond to the first information.

In a possible implementation, that the processing unit determines the first priority based on a priority of the second node and one or more of a delay requirement, a quality of service QoS level, an information type, and a preset priority that correspond to the first information includes:
determining the first priority based on the delay requirement and the information type that correspond to the first information.

In a possible implementation, the processing unit is further configured to:
when a second packet is sent through a second channel, and a priority corresponding to the second channel is lower than a priority corresponding to a first channel, suspend sending of the second packet; and
resume sending of the second packet after the first packet is successfully sent. In a possible implementation, the transceiver unit is further configured to: when a third node exists in the second node, and a packet from the third node is received in a first time period after the first packet is sent, retransmit the first packet to the second node through the first channel, where the third node is a node that operates in a half-duplex mode, and the first time period is less than or equal to a time threshold.

In a possible implementation, the transceiver unit is further configured to: retransmit the first packet to the second node through the first channel when a quantity of ACKs for the first packet is less than a first quantity, where the first quantity is a quantity of second nodes.

In a possible implementation, when the first priority is greater than or equal to a first threshold, the first channel is a channel that carries highest-priority information in the plurality of channels; or
when the first priority is less than a second threshold, the first channel is a channel that carries lowest-priority information in the plurality of channels. The first threshold is greater than or equal to the second threshold.

According to a fourth aspect, this application discloses a communication apparatus. The communication apparatus may be used in a second node, or may be used in a module (for example, a chip) in the second node, or may be used in a logical module or software that can implement all or some functions of the second node. A plurality of channels are disposed on the second node, different channels in the plurality of channels respectively carry information of different priorities, and the channel herein is a physical channel established by using a power line. The communication apparatus may include:
a transceiver unit, configured to receive a first packet from a first node through a first channel, where the first channel is a channel that carries information of a first priority in the plurality of channels, the first packet includes first information, the first priority is a priority of the first information, and the first node establishes a connection to the second node through a power line; and
a processing unit, configured to process the first information.

In a possible implementation, power lines corresponding to different channels in the plurality of channels are different.

In a possible implementation, preambles corresponding to different channels in the plurality of channels are different, the first packet further includes a first preamble, and the first preamble is a preamble corresponding to the first channel.

In a possible implementation, the preambles corresponding to different channels in the plurality of channels are orthogonal to each other.

In a possible implementation, preambles corresponding to different channels in the plurality of channels are the same, the first packet further includes a second preamble, and the second preamble is a common preamble for the plurality of channels.

In a possible implementation, the first priority is determined based on a priority of the second node and one or more of a delay requirement, a QoS level, an information type, and a preset priority that correspond to the first information.

In a possible implementation, that the first priority is determined based on a priority of the second node and one or more of a delay requirement, a QoS level, an information type, and a preset priority that correspond to the first information includes: The first priority is determined based on the delay requirement and the information type that correspond to the first information. In a possible implementation, the transceiver unit is further configured to send an ACK for the first packet to the first node when the first packet is successfully received.

In a possible implementation, when the first priority is greater than or equal to a first threshold, the first channel is a channel that carries highest-priority information in the plurality of channels, or
when the first priority is less than a second threshold, the first channel is a channel that carries lowest-priority information in the plurality of channels. The first threshold is greater than or equal to the second threshold.

According to a fifth aspect, this application discloses a communication apparatus. A plurality of channels are disposed on the communication apparatus, different channels in the plurality of channels respectively carry information of different priorities, and the channel is a physical channel established by using a power line. The communication apparatus may include a processor, a memory, a plurality of transceivers, and/or a plurality of couplers. The plurality of channels one-to-one correspond to the plurality of transceivers, the plurality of transceivers one-to-one correspond to the plurality of couplers, each of the plurality of transceivers is configured to: receive information from a communication apparatus other than the communication apparatus, and send information to the communication apparatus other than the communication apparatus, each of the plurality of couplers is configured to couple, to a power line corresponding to a corresponding channel, information sent by the corresponding transceiver in the plurality of transceivers to the communication apparatus other than the communication apparatus, and the processor invokes a computer program stored in the memory, to implement the communication method according to any one of the first aspect or the implementations of the first aspect.

According to a sixth aspect, this application discloses a communication apparatus. A plurality of channels are disposed on the communication apparatus, different channels in the plurality of channels respectively carry information of different priorities, and the channel is a physical channel established by using a power line. The communication apparatus may include a processor, a memory, a plurality of transceivers, and/or a plurality of couplers. The plurality of channels one-to-one correspond to the plurality of transceivers, the plurality of transceivers one-to-one correspond to the plurality of couplers, each of the plurality of transceivers is configured to: receive information from a communication apparatus other than the communication apparatus, and send information to the communication apparatus other than the communication apparatus, each of the plurality of couplers is configured to couple, to a power line corresponding to a corresponding channel, information sent by the corresponding transceiver in the plurality of transceivers to the communication apparatus other than the communication apparatus, and the processor invokes a computer program stored in the memory, to implement the communication method according to any one of the second aspect or the implementations of the second aspect.

According to a seventh aspect, this application discloses a communication system. The communication system includes the communication apparatus according to the fifth aspect and the communication apparatus according to the sixth aspect.

According to an eighth aspect, this application discloses a computer-readable storage medium. The computer-readable storage medium stores a computer program or computer instructions. When the computer program or the computer instructions are run by a processor, the communication methods according to the foregoing aspects are implemented.

According to a ninth aspect, this application discloses a chip, including a processor, configured to execute a program stored in a memory. When the program is executed, the chip is enabled to perform the foregoing methods.

In a possible implementation, the memory is located outside the chip.

According to a tenth aspect, this application discloses a computer program product. The computer program product includes computer program code. When the computer program code is run by a processor, the foregoing communication methods are performed.

### BRIEF DESCRIPTION OF DRAWINGS

FIG. 1 is a diagram of a slot according to an embodiment of this application;
FIG. 2 is a diagram of a network architecture according to an embodiment of this application;
FIG. 3 is a diagram of smart photovoltaics according to an embodiment of this application;
FIG. 4 is a schematic flowchart of a communication method according to an embodiment of this application;
FIG. 5 is a diagram in which different channels correspond to different power lines according to an embodiment of this application;
FIG. 6 is a schematic flowchart of another communication method according to an embodiment of this application;
FIG. 7 is a diagram of channel pairs between two nodes according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of still another communication apparatus according to an embodiment of this application; and
FIG. 11 is a diagram of an architecture of a photovoltaic system according to an embodiment of this application.

### DESCRIPTION OF EMBODIMENTS

Embodiments of this application disclose a communication method and apparatus, to increase a transmission rate of information in PLC communication. Details are separately described below.

The following first describes related technologies in embodiments of this application, to better understand embodiments of this application.

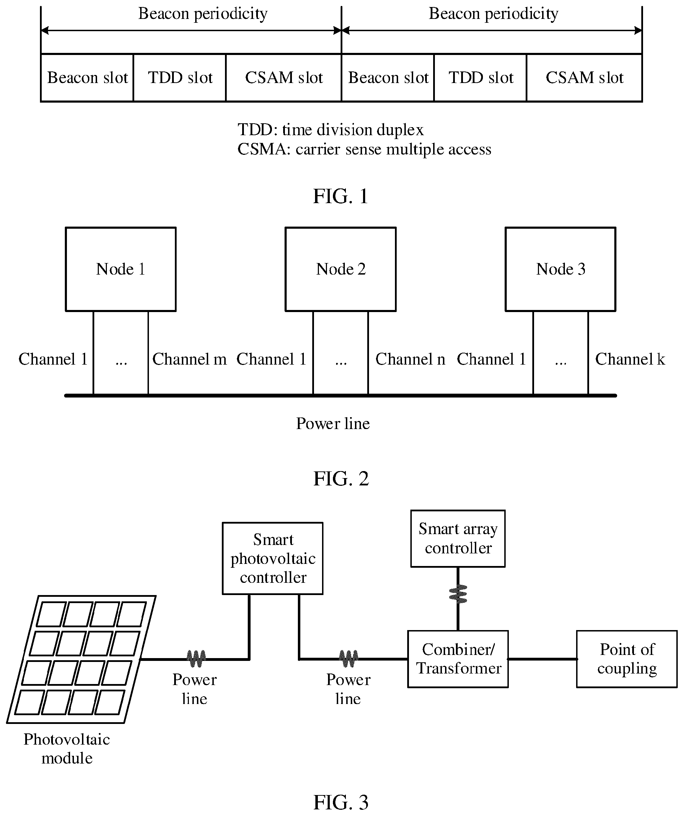

FIG. 1 is a diagram of a slot according to an embodiment of this application. As shown in FIG. 1, in power line communication, each beacon periodicity includes a time division duplex (time division duplex, TDD) slot and a carrier sense multiple access (carrier sense multiple access, CSMA) slot. In one case, a dedicated TDD slot may be allocated for a specific purpose. In a case in which a node needs to send information for a specific purpose, the node may send the information in the dedicated TDD slot. In another case, in a case in which a node needs to send information, the node may listen on a channel in the CSMA slot, and when detecting that the channel is idle, the node may preempt, after backing off random time, the channel for sending.

In the case in which the information for a special purpose is sent in the dedicated TDD slot, when arrival time of the information for a special purpose misses a TDD slot of a current beacon periodicity, the node needs to wait a dedicated TDD slot in a next beacon periodicity to send the information for a special purpose. As a result, waiting time is long, and a transmission rate is low.

In the case in which the information is sent in the CSMA slot, when it is detected, through listening, that the channel is busy, the node can preempt the channel only after the channel is idle. As a result, waiting time is long, and a transmission rate is low.

It can be learned that how to ensure rapid transmission of information in PLC communication has become an urgent technical problem to be resolved.

The following first describes a network architecture used in embodiments of this application, to better understand embodiments of this application. FIG. 2 is a diagram of a network architecture according to an embodiment of this application. As shown in FIG. 2, the network architecture may include a plurality of nodes (three nodes are shown in FIG. 2), and the plurality of nodes are connected to each other through power lines (or power cables). A plurality of channels are disposed on each of the plurality of nodes, and quantities of channels disposed on different nodes may be the same or different. For example, as shown in FIG. 2, m channels are disposed on a node 1, n channels are disposed on a node 2, and k channels are disposed on a node 3, where m, n, and k are integers greater than 1, and m, n, and k may be the same or different.

Before the nodes perform communication, a channel pair between the nodes may be first established, and then information sent by a node through a channel may be received by another node through a channel corresponding to the channel.

The node may send information through a plurality of channels at the same time, or may receive information through a plurality of channels at the same time. When the node operates in a full-duplex mode, the node may send information through a channel, and may receive information from another node through the channel. When the node operates in a half-duplex mode, the node can only send or receive information through a channel at a time, but cannot send and receive information at the same time.

The node may be a device that may perform communication through a power line, such as a communication server, a router, a switch, a network bridge, or a computer.

FIG. 3 is a diagram of smart photovoltaics according to an embodiment of this application. As shown in FIG. 3, communication between a photovoltaic module and a smart photovoltaic controller is PLC communication, communication between the smart photovoltaic controller and a combiner/transformer is PLC communication, and communication between the combiner/transformer and a smart array controller is PLC communication. In the smart photovoltaics, a node may be the photovoltaic module, or may be the smart photovoltaic controller, or may be the combiner/transformer, or may be the smart array controller.

It should be understood that the foregoing describes an example of an application scenario for the network architecture, and does not limit the application scenario for the network architecture. For example, the network architecture may also be applied to a Wi-Fi system, or may be applied to a smart home, or may be applied to another system in which communication is performed through a power line.

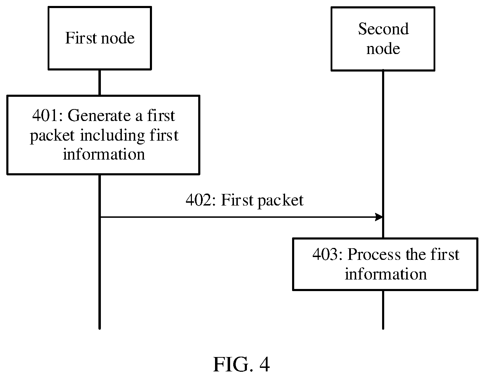

Based on the foregoing network architecture, refer to FIG. 4. FIG. 4 is a schematic flowchart of a communication method according to an embodiment of this application. As shown in FIG. 4, the communication method may include the following steps.

401: A first node generates a first packet including first information.

A plurality of channels are disposed on the first node, and the plurality of channels may respectively carry information of different priorities. It can be learned that the information of different priorities may be transmitted through different channels. Correspondences between channels and priorities of transmitted information may be shown in Table 1 and Table 2:

**Table 1**

| Channel | Priority of information |
|---|---|
| Channel 1 | Priority 1 |
| Channel 2 | Priority 2 |
| ... | ... |

**Table 2**

| Channel | Priority of information |
|---|---|
| Channel 1 | (-∞, priority 1) |
| Channel 2 | [Priority 1, priority 2) |
| ... | ... |

As shown in Table 1, one channel may correspond to one priority, that is, information of one priority may be transmitted through one channel, that is, one channel may carry information of one priority. As shown in Table 2, one channel may correspond to one priority range, that is, one channel may correspond to multiple priorities, that is, information of multiple priorities may be transmitted through one channel, that is, one channel may carry information of multiple priorities.

It should be understood that the channel is a physical channel established by using a power line. One channel may correspond to two power lines (or power cables), that is, one channel may be established by using two power lines. Power lines corresponding to different channels in a plurality of channels disposed on the first node and a second node are different, so that physical isolation between the different channels can be implemented, and mutual interference between the different channels can be reduced, to improve a rate and reliability of transmission of information. That power lines corresponding to different channels in a plurality of channels are different may be understood as that one of two power lines corresponding to different channels in the plurality of channels is different from one of two power lines corresponding to different channels in the plurality of channels, or may be understood as that two power lines corresponding to different channels in the plurality of channels are different from two power lines corresponding to different channels in the plurality of channels. One power line is one electric wire or one power cable, and may include one conducting wire medium, or may include a plurality of conducting wire media.

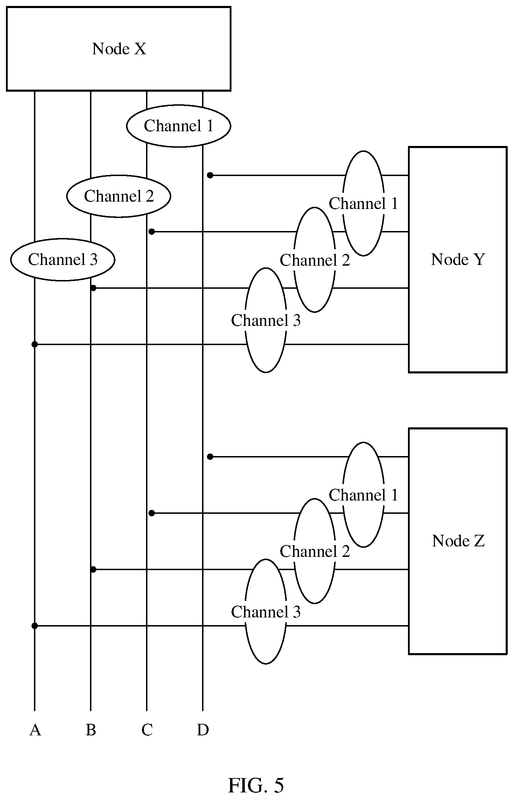

For example, refer to FIG. 5. FIG. 5 is a diagram in which different channels correspond to different power lines according to an embodiment of this application. As shown in FIG. 5, a PLC communication system includes a node X, a node Y, and a node Z. The node X, the node Y, and the node Z each include three physical channels: a channel 1, a channel 2, and a channel 3. The channel 1 corresponds to a power line C and a power line D, the channel 2 corresponds to a power line B and the power line C, and the channel 3 corresponds to a power line A and the power line B. It can be learned that different channels on a node may be coupled to different power lines based on physical characteristics of a plurality of power lines, so that physical isolation between the different channels can be implemented, and mutual interference between the different channels can be avoided, to improve reliability of transmission of information.

It should be understood that FIG. 5 describes an example in which different channels correspond to different power lines, and does not constitute a limitation. For example, channels disposed on the node may be 2, 4, 5, 6, and the like. For another example, a quantity of power lines may be 3, 5, 6, or the like.

The first node may generate the first packet including the first information. The second node is a receiving node of the first information, and there may be one or more second nodes. The second node establishes a connection to the first node through a power line. The plurality of channels are disposed on the second node, and the plurality of channels respectively carry information of different priorities. A quantity of channels disposed on the first node may be the same as or different from a quantity of channels disposed on the second node. There may be one or more channel pairs that may be used for communication and that are between the first node and the second node.

The first node may further determine a first priority, and may further determine a first channel based on the first priority. The first priority is a priority of the first information. The first channel is a channel that may carry information of the first priority in the plurality of channels disposed on the first node.

The first node may determine the first priority based on a priority of the second node and one or more of a delay requirement, a QoS level, an information type, and a preset priority that correspond to the first information.

The priority of the second node may be predefined. Alternatively, the priority of the second node may be determined based on one or more of a distance between the first node and the second node, a management range of the second node, a communication capability of the second node, and a communication level of the second node. The priority of the second node may be positively correlated to the distance between the first node and the second node. In other words, a longer distance between the first node and the second node indicates a higher priority of the second node, that is, a shorter distance between the first node and the second node indicates a lower priority of the second node. The priority of the second node may alternatively be negatively correlated to the distance between the first node and the second node. The priority of the second node is related to the management range of the second node, and may be positively correlated or negatively correlated to the management range of the second node. For example, a larger management range of the second node indicates a higher priority of the second node. The management range of the second node may be determined based on one or more of a quantity of devices or apparatuses managed by the second node, a category of the device or apparatus managed by the second node, and a distance between the second node and the managed device or apparatus. The priority of the second node is positively correlated to the communication capability of the second node. The priority of the second node is positively correlated to the communication level of the second node. The communication capability of the second node may be determined based on one or more of transmit power, a communication distance, a quantity of supported nodes, a supported transmission rate, a processing capability, and the like of the second node. The communication level of the second node may be determined based on the communication capability of the second node. When the communication capability of the second node is weak or low, the communication level of the second node is low. On the contrary, when the communication capability of the second node is strong or high, the communication level of the second node is high. In one case, the priority of the second node may be determined by the second node and then sent to the first node. In another case, the second node may send, to the first node, information used to determine the priority of the second node, and the first node may determine the priority of the second node based on the information. When there is one second node, the priority of the second node is a priority of the second node. When there is more than one second node, the priority of the second node may be an average value of priorities of multiple second nodes, or may be a weighted average value of priorities of multiple second nodes, or may be a largest value in priorities of multiple second nodes, or may be a smallest value in priorities of multiple second nodes, or may be an intermediate value in priorities of multiple second nodes.

The delay requirement corresponding to the first information is a longest delay allowed in transmission of the first information. The delay requirement corresponding to the first information is negatively correlated to the first priority. To be specific, a lower delay requirement corresponding to the first information indicates a higher first priority, and a higher delay requirement corresponding to the first information indicates a lower first priority.

The QoS level corresponding to the first information may be a QoS level of the first information, or may be a QoS level of a service corresponding to the first information. The QoS level corresponding to the first information is positively correlated to the first priority. That is, a higher QoS level corresponding to the first information indicates a higher first priority, and a lower QoS level corresponding to the first information indicates a lower first priority.

The information type corresponding to the first information may be control information, or may be data information. A priority of the control information is higher than a priority of the data information. When the first information is control information, the first priority is high. When the first information is data information, the first priority is low.

The preset priority corresponding to the first information may be a priority that is preset for the first information, or may be a priority that is preset for the service corresponding to the first information, or may be a priority that is preset for the information type corresponding to the first information. The preset priority corresponding to the first information may be determined based on one or more of an importance degree, reliability, and a degree of impact on a network of the first information. The preset priority corresponding to the first information is positively correlated to the first priority.

In an implementation, the first node may determine the first priority based on the priority of the second node, that is, may determine the first priority based on a priority of the receiving node of the first information. In another implementation, the first node may determine the first priority based on the delay requirement corresponding to the first information. In still another implementation, the first node may determine the first priority based on the QoS level corresponding to the first information. In still another implementation, the first node may determine the first priority based on the information type corresponding to the first information. In still another implementation, the first node may determine the first priority based on the preset priority corresponding to the first information. In still another implementation, the first node may determine the first priority based on the priority of the second node and two or more of the delay requirement, the QoS level, the information type, and the preset priority that correspond to the first information. The following uses an example in which the first node determines the first priority based on the delay requirement and the QoS level that correspond to the first information for description.

For example, the first node may determine a priority 1 based on the delay requirement corresponding to the first information, may determine a priority 2 based on the QoS level corresponding to the first information, and may determine a sum of λ1*priority 1 and λ2*priority 2 as the first priority. λ1 is a weighted value of the delay requirement corresponding to the first information, λ2 is a weighted value of the QoS level corresponding to the first information, and a sum of λ1 and λ2 is 1.

It can be learned that when the first priority is determined based on multiple pieces of information, a corresponding priority may be first determined based on each piece of information, and then the first priority may be obtained by performing a weighted sum on these priorities. Weights corresponding to different information may be fixed, or may be variable. When the weights corresponding to different information are variable, the weights may be determined, based on requirements of a specific service and an application scenario, through negotiation between nodes according to a user-defined algorithm.

After the first node determines the first priority, when the correspondences between the channels and the priorities of transmitted information are shown in Table 1 (referred to as a first correspondence), the first node may determine whether a priority that is the same as the first priority exists in the priorities included in the first correspondence, and may determine a channel corresponding to the priority in the first correspondence as the first channel when the priority that is the same as the first priority exists in the priorities included in the first correspondence. When no priority that is the same as the first priority exists in the priorities included in the first correspondence, the first node may determine, as the first channel, a channel corresponding to a priority that is in the first correspondence and that has a smallest absolute value of a difference between the priority and the first priority. When the correspondences between the channels and the priorities of transmitted information are shown in Table 2 (referred to as a second correspondence), the first node may determine, as the first channel, a channel corresponding to a priority range including the first priority in the second correspondence.

For example, when the first priority is greater than or equal to a first threshold, the first channel is a channel that carries highest-priority information in the plurality of channels disposed on the first node; or when the first priority is less than a second threshold, the first channel is a channel that carries lowest-priority information in the plurality of channels disposed on the first node. The first threshold is greater than or equal to the second threshold. When two channels are disposed on the first node, the first threshold is equal to the second threshold. When three or more channels are disposed on the first node, the first threshold is greater than the second threshold.

Preambles corresponding to different channels in the plurality of channels disposed on the first node and the second node may be different or may be the same.

When the preambles corresponding to different channels in the plurality of channels are different, the first node may first determine the first priority, then may determine the first channel based on the first priority, and may further generate a first packet that includes the first information and a first preamble. The first preamble is a preamble corresponding to the first channel. The different preambles are used for the different channels, so that mutual interference between the different channels can be reduced, thereby improving reliability of transmission of information. In addition, the preambles corresponding to different channels in the plurality of channels disposed on the first node and the second node may be orthogonal to each other, to further reduce mutual interference between the different channels, so as to further improve reliability of transmission of information. The preamble is a special sequence for identifying a PLT communication packet. For example, the preamble may be an initial sequence of the PLT communication packet. When the receiving node detects the preamble, it indicates that there is a transmitted PLT communication packet, and information following the preamble may be received.

When the preambles corresponding to different channels in the plurality of channels are the same, the first node may generate a first packet that includes the first information and a second preamble. The second preamble is a common preamble for the plurality of channels disposed on the first node. In this case, the step of generating the first packet by the first node and the step of determining the first priority and/or determining the first channel may be performed in series or in parallel.

402: The first node sends the first packet to the second node through the first channel.

Correspondingly, the second node receives the first packet from the first node through a first channel.

The first channel on the first node and the first channel on the second node form a channel pair.

After generating the first packet and determining the first channel, the first node may send the first packet to the second node through the first channel. Correspondingly, the second node may receive the first packet from the first node through the first channel corresponding to the first channel.

In a case in which the first node needs to send the first packet to the second node, if the first node is sending a second packet through a second channel, and a priority corresponding to the second channel is lower than a priority of the first channel, that is, a priority of information that can be carried by the second channel is lower than a priority of information that can be carried by the first channel, it indicates that the first priority is higher than a priority of second information included in the second packet, that is, the priority of the first information is higher than the priority of the second information, that is, the first information is more important than the second information. To ensure reliability of transmission of the first information, the first node may first suspend (or interrupt) sending of the second packet, may send the first packet to the second node through the first channel, and may resume sending of the second packet after the first packet is successfully sent. The second packet includes the second information. The first information is different from the second information. It can be learned that, in a case in which sending of high-priority information exists, sending of low-priority information may be suspended, to ensure reliability of transmission of the high-priority information.

In an implementation, when the first channel is the channel that carries the highest-priority information in the plurality of channels disposed on the first node, when the first node needs to send a packet through the first channel, a packet sent on another channel may be suspended, to ensure reliability of transmission of the highest-priority information.

In another implementation, when the high-priority information waits to be sent, the first node suspends sending of the low-priority information, to ensure reliability of transmission of the high-priority information.

403: The second node processes the first information.

After receiving the first packet, the second node may process the first information included in the first packet. When the first information is the control information, the second node may perform control corresponding to the first information. When the first information is the data information, the second node may store the first information, or may obtain other information based on the first information, or may perform exchange based on the first information, or may perform other processing.

After sending the first packet, the first node may determine, based on whether the first packet is successfully sent, whether to retransmit the first packet to the second node. When the first packet is successfully sent, the first node does not retransmit the first packet to the second node. When the first packet fails to be sent, the first node may retransmit the first packet to the second node. That the first packet fails to be sent may be understood as that the first packet sent by the first node to all second nodes fails to be sent, or may be understood as that the first packet sent by the first node to some second nodes fails to be sent.

In one case, after receiving the first packet, the second node may determine whether the first packet is successfully received, and may send an ACK for the first packet to the first node when the first packet is successfully received. After the first node receives an ACK from a second node, it indicates that the first packet is successfully sent to the second node. When a quantity of ACKs for the first packet is less than a first quantity, it indicates that some second nodes fail to receive the first packet. Therefore, the first node may retransmit the first packet to the second node through the first channel, so that all the second nodes can receive the first packet from the first node. The first quantity is a quantity of second nodes.

In another case, a node may operate in a full-duplex mode, or may operate in a half-duplex mode. The node that operates in the half-duplex mode cannot send information and receive information at the same time. Therefore, after sending the first packet, the first node may first determine whether a third node exists in the second nodes. When it is determined that the third node exists in the second nodes, it indicates that a second node that operates in the half-duplex mode exists in the second nodes, and whether a packet from the third node is received in a first time period after the first packet is sent may continue to be determined. When the packet from the third node is received in the first time period after the first packet is sent, it indicates that the third node is sending information when the first node sends the first packet to the third node, and the third node cannot receive the first packet from the first node. Therefore, the first packet may be retransmitted to the second node through the first channel. When it is determined that the third node does not exist in the second nodes, it indicates that a second node that operates in the half-duplex mode does not exist in the second nodes. The first packet may not be retransmitted to the second node. When the first node does not receive a packet from the third node in a first time period after the first packet is sent, it indicates that the third node is not sending information when the first node sends the first packet to the third node, and the third node may receive the first packet from the first node. The first node may not retransmit the first packet to the second node. The first time period is less than or equal to a time threshold. The time threshold is a maximum delay for transmitting information through a power line.

In still another case, the first node may first determine whether a third node exists in the second nodes, may continue to determine, when determining that the third node exists in the second nodes, whether a packet from the third node is received in a first time period after the first packet is sent, and may retransmit the first packet to the second node through the first channel when the packet from the third node is received in the first time period after the first packet is sent. When it is determined that the third node does not exist in the second nodes, or no packet from the third node is received in the first time period after the first packet is sent, whether a quantity of ACKs for the first packet is less than a first quantity may continue to be determined. When the quantity of ACKs for the first packet is less than the first quantity, the first packet may be retransmitted to the second node through the first channel.

In the foregoing communication method, the plurality of channels are disposed on the nodes, and information of different priorities may be transmitted through different channels. Therefore, the information of different priorities may be sent through the different channels. Further, the information of different priorities may be sent through the different channels at the same time, to shorten waiting time of the information, so as to increase a transmission rate of information in PLC communication.

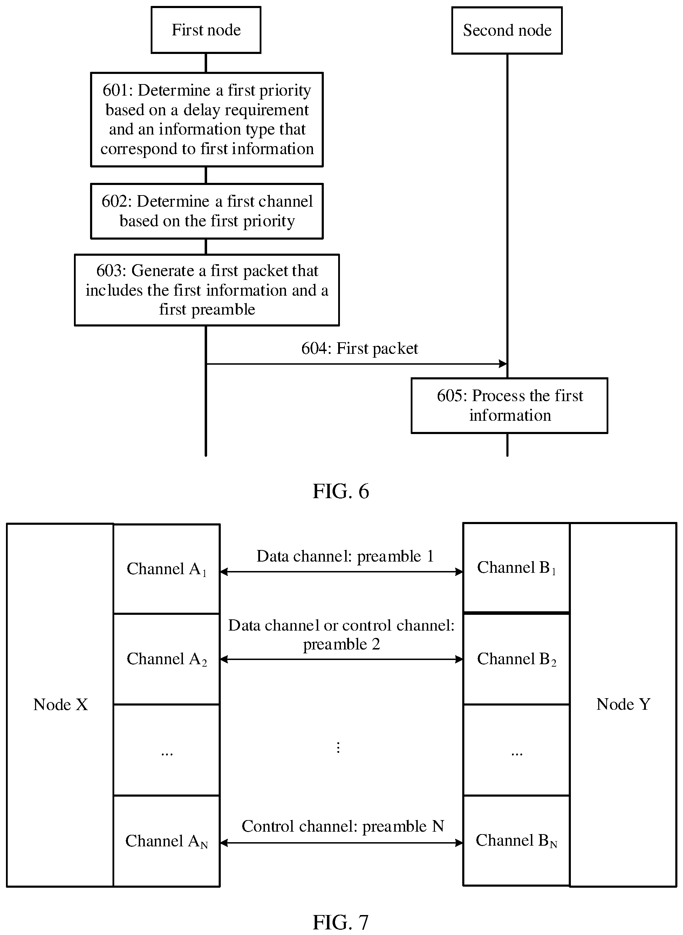

Based on the foregoing network architecture, refer to FIG. 6. FIG. 6 is a schematic flowchart of another communication method according to an embodiment of this application. As shown in FIG. 6, the communication method may include the following steps.

601: A first node determines a first priority based on a delay requirement and an information type that correspond to first information.

The first node may determine a delay priority based on the delay requirement corresponding to the first information. Correspondences between delay requirements corresponding to information and delay priorities corresponding to the information may be shown in Table 3:

**Table 3**

| Delay requirement corresponding to information | Delay priority corresponding to the information |
|---|---|
| [Delay 1, +∞) | k₁ |
| [Delay 2, delay 1) | k₂ |
| ... | ... |
| (-∞, delay J) | kᵢ |

Herein, i is an integer greater than 1, k₁, k₂, ..., and kᵢ are greater than 0, and k₁, k₂, ..., and kᵢ increase sequentially. It can be learned that a higher delay requirement indicates a lower delay priority, and a lower delay requirement indicates a higher priority.

The first node may determine a type priority based on the information type corresponding to the first information. Correspondences between information types corresponding to information and type priorities corresponding to the information may be shown in Table 4:

**Table 4**

| Information type corresponding to information | Type priority corresponding to the information |
|---|---|
| Control information | a |
| Data information | b |

Herein, a is greater than 0, and b is greater than a.

The first node may determine the first priority based on the delay priority and the type priority. The first priority may be a sum of the delay priority and the type priority, or may be a weighted sum of the delay priority and the type priority.

It can be learned from Table 3 and Table 4 that a priority of control information whose delay requirement is less than the delay J is the highest, a priority of data information whose delay requirement is greater than or equal to the delay 1 is the lowest, and a priority of control information or data information whose delay requirement is greater than or equal to the delay J and less than the delay 1 is between the highest priority and the lowest priority. Priorities of control information and data information whose delay requirements are greater than or equal to the delay J and less than the delay 1 may be the same or may be different.

It can be learned that there may be a dedicated control channel in a plurality of channels disposed on the first node, and the dedicated control channel is specially used to transmit control information having a lowest delay requirement. There may be a dedicated data channel in the plurality of channels, and the dedicated data channel is specially used to transmit data information having a highest delay requirement. There may be one or more hybrid channels in the plurality of channels. Both control information and data information may be transmitted through the one or more hybrid channels. Transmitted information corresponds to a priority of information that can be carried by the channel. It can be learned that different physical channels may be used to ensure that a control packet having a low delay requirement is not interfered with by a packet on another channel, to ensure real-time performance of control information.

For example, refer to FIG. 7. FIG. 7 is a diagram of channel pairs between two nodes according to an embodiment of this application. As shown in FIG. 7, when a node X communicates with a node Y, N channel pairs may be established. Channels A₁, A₂, ..., and A_{N} of the node X correspond to channels B₁, B₂, ..., and B_{N} of the node Y, respectively. Information of different priorities is transmitted through different channel pairs. For example, data information (or a data packet) is transmitted between the channel A₁ of the node X and the channel B₁ of the node Y, and this type of data information is insensitive to a delay. Data information or control information may be transmitted between the channel A₂ of the node X and the channel B₂ of the node Y. When the control information is transmitted, a control packet transmitted through the channel and a control packet transmitted through the channel A_{N} have different priorities. The channel A_{N} of the node X and the channel B_{N} of the node Y are specially used to transmit control information (or a control packet) of a specific priority, to ensure that the control packet is not blocked, so as to achieve a low-delay control objective. N is an integer greater than 2.

602: The first node determines a first channel based on the first priority.

For detailed descriptions of step 602, refer to the related descriptions of step 401.

When the first priority is greater than or equal to a first threshold, the first channel is a channel that carries highest-priority information in the plurality of channels disposed on the first node, namely, a control channel, or when the first priority is less than a second threshold, the first channel is a channel that carries lowest-priority information in the plurality of channels disposed on the first node, namely, a data channel. When the first priority is greater than or equal to the second threshold and less than the first threshold, the first channel is a channel that carries information of the first priority in the plurality of channels disposed on the first node, namely, a hybrid channel. The first threshold is greater than or equal to the second threshold.

603: The first node generates a first packet that includes the first information and a first preamble.

For detailed descriptions of step 603, refer to the related descriptions of step 401.

As shown in FIG. 7, to avoid mutual interference between different channels between the node X and the node Y, different preambles may be used for the different channels for information transmission, and the different preambles are orthogonal to each other. For example, a preamble 1 is used for the channel A₁ of the node X, a preamble 2 is used for the channel A₂ of the node X, and a preamble N is used for the channel A_{N} of the node X, so that it can be ensured that the channel B₁ of the node Y can synchronize and receive data information after the preamble 1, the channel B₂ of the node Y can receive data information or control information after the preamble 2, and the channel B_{N} of the node Y can receive control information after the preamble N. Even if a packet sent by the channel A₂ of the node X is intruded into the channel A₁ of the node Y, the packet is not synchronized and received by the channel B₁ of the node Y. It can be learned that different preambles are used for packets on different channels. Even if physical isolation between physical channels cannot be completely implemented, different preambles ensure that packets do not interfere with each other, to ensure real-time performance of high-priority control information.

604: The first node sends the first packet to a second node through the first channel.

Correspondingly, the second node receives the first packet from the first node through a first channel.

For detailed descriptions of step 604, refer to step 402.

605: The second node processes the first information.

For detailed descriptions of step 605, refer to step 403.

It should be understood that the communication method shown in FIG. 6 is a specific implementation of the communication method shown in FIG. 4.

It should be understood that a function performed by the node in the foregoing communication methods may alternatively be performed by a module (for example, a chip) in the node, or may be performed by a logical module or software having all or some functions of the node.

It should be understood that related information (namely, same information or similar information) in the foregoing same embodiment or different embodiments may be mutually referenced.

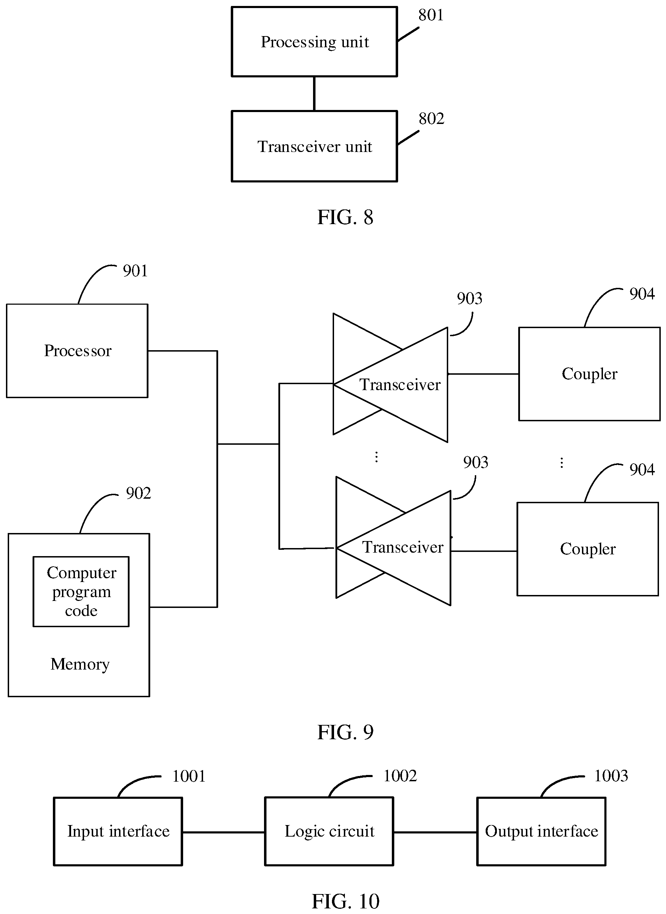

Based on the foregoing network architecture, refer to FIG. 8. FIG. 8 is a diagram of a structure of a communication apparatus according to an embodiment of this application. As shown in FIG. 8, the communication apparatus may include a processing unit 801 and a transceiver unit 802.

In a case, the communication apparatus may be a first node, or may be a module (for example, a chip) in the first node, or may be a logical module or software that can implement all or some functions of the first node. For detailed descriptions, refer to the third aspect in the summary.

In another case, the communication apparatus may be a second node, or may be a module (for example, a chip) in the second node, or may be a logical module or software that can implement all or some functions of the second node. For detailed descriptions, refer to the fourth aspect in the summary.

For more detailed descriptions of the processing unit 801 and the transceiver unit 802, directly refer to the related descriptions of the first node and the second node in the method embodiments shown in FIG. 4 and FIG. 6. Details are not described herein again.

Based on the foregoing network architecture, refer to FIG. 9. FIG. 9 is a diagram of a structure of another communication apparatus according to an embodiment of this application. The communication apparatus may be the communication apparatus in the foregoing embodiment, and is configured to implement the foregoing method embodiments. The communication apparatus may be the communication apparatus that has a function of a terminal device in the foregoing embodiment, or may be a functional module in the foregoing communication apparatus. For a specific function of the communication apparatus, refer to the descriptions in the foregoing method embodiments.

The communication apparatus may include one or more processors 901. The processor 901 may also be referred to as a processing unit, and may implement a specific control function. The processor 901 may be a general-purpose processor, a dedicated processor, or the like, for example, a baseband processor, a central processing unit, an application processor, a modem processor, a graphics processor, an image signal processor, a digital signal processor, a video codec processor, a controller, a memory, and/or a neural network processor. The baseband processor may be configured to process a communication protocol and communication data. The central processing unit may be configured to control the communication apparatus, execute a software program, and/or process data. Different processors may be independent devices, or may be integrated into one or more processors, for example, integrated into one or more application-specific integrated circuits.

Optionally, the communication apparatus may include one or more memories 902, configured to store computer program code. The computer program code may be run on the processor 901, so that the communication apparatus performs the methods described in the foregoing method embodiments.

Optionally, the memory 902 may further store data. The processor 901 and the memory 902 may be separately disposed, or may be integrated together.

A plurality of channels are disposed on the communication apparatus, different channels in the plurality of channels respectively carry information of different priorities, and the channel is a physical channel established by using a power line. Optionally, the communication apparatus may further include a plurality of transceivers 903 and/or a plurality of couplers 904. The plurality of channels one-to-one correspond to the plurality of transceivers 903, and the plurality of transceivers 903 one-to-one correspond to the plurality of couplers 904. The transceiver 903 may be referred to as a transceiver unit, a transceiver machine, a transceiver circuit, a transceiver, an input/output interface, or the like, and is configured to implement receiving and sending functions of the communication apparatus via the coupler 904.

The processor 901 and the transceiver 903 described in this application may be implemented on an integrated circuit (integrated circuit, IC), an analog IC, a radio frequency (radio frequency identification, RFID) integrated circuit, a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of a terminal device. Details are not described herein again.

Based on the foregoing network architecture, refer to FIG. 10. FIG. 10 is a diagram of a structure of still another communication apparatus according to an embodiment of this application. As shown in FIG. 10, the communication apparatus may include an input interface 1001, a logic circuit 1002, and an output interface 1003. The input interface 1001 is connected to the output interface 1003 through the logic circuit 1002. The input interface 1001 is configured to receive information from another communication apparatus, and the output interface 1003 is configured to output, schedule, or send information to another communication apparatus. The logic circuit 1002 is configured to perform an operation other than operations of the input interface 1001 and the output interface 1003, for example, implement a function implemented by the processor 901 in the foregoing embodiment. The communication apparatus may be a first node, or may be a second node. For more detailed descriptions of the input interface 1001, the logic circuit 1002, and the output interface 1003, directly refer to the related descriptions of the first node and the second node in the foregoing method embodiments. Details are not described herein again.

An embodiment of this application further discloses a computer-readable storage medium. The computer-readable storage medium stores instructions, and when the instructions are executed by a processor, the methods in the foregoing method embodiments are performed.

An embodiment of this application further discloses a computer program product including instructions. When the instructions are executed by a processor, the methods in the foregoing method embodiments are performed.

An embodiment of this application further discloses a communication system. The communication system may include a first node and a second node. For specific descriptions, refer to the communication methods shown in FIG. 4 and FIG. 6.

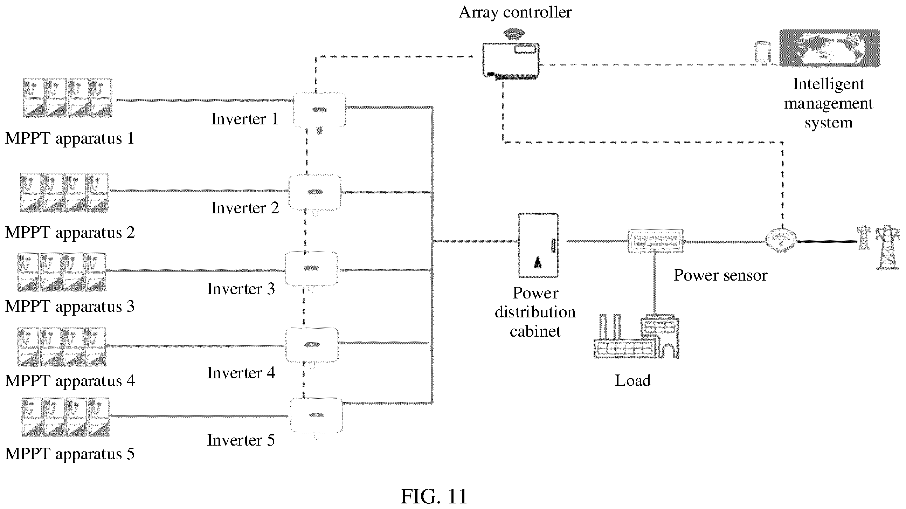

An embodiment of this application further provides a photovoltaic system. The solutions provided in the foregoing embodiments may be applied to the photovoltaic system. As shown in FIG. 11, the photovoltaic system may include an inverter, a maximum power point tracking (Maximum power point tracking, MPPT) apparatus, and an array controller. An input end of the MPPT apparatus is configured to connect to a plurality of photovoltaic strings. The MPPT apparatus is configured to perform power conversion on electric energy input from the photovoltaic strings, so that the MPPT apparatus outputs stable electric energy. An output end of the MPPT apparatus is configured to connect to the inverter. The inverter converts an input direct current into an alternating current and inputs the alternating current to a bus. Electric energy may be further transmitted to a load or a power grid via a power distribution cabinet. As shown in FIG. 11, the photovoltaic system may include a plurality of inverters, and these inverters may be controlled by the array controller.

In an implementation, a data packet and a control packet are transmitted between the inverter and the array controller through a power line. The inverter in this embodiment may be the first node in the foregoing embodiments, and the array controller is the second node in the corresponding embodiments.

The inverter includes one or more transceivers. The one or more transceivers are configured to receive or send a packet through a plurality of physical channels established by using a plurality of power lines, and two physical channels in the plurality of physical channels respectively carry information of different priorities.

The inverter is configured to send a data packet to the array controller through a data channel, where the data packet includes electric energy data of the inverter, and the electric energy data includes one or more of a current, a voltage, or power of the inverter. The current, the voltage, or the power of the inverter mentioned herein may be an input current, an input voltage, or input power, or may be an output current, an output voltage, or output power. The electric energy data may further include various register parameters in the inverter.

The inverter is further configured to receive, through a control channel, a control packet sent by the array controller, where the control packet indicates the inverter to adjust the output power of the inverter. The data channel and the control channel are two physical channels in the plurality of physical channels.

The array controller is configured to receive the electric energy data reported by the inverter. The array controller includes one or more transceivers. The array controller is configured to receive, through a data channel, the data packet sent by the inverter. The data packet includes the electric energy data of the inverter. The electric energy data includes one or more of the current, the voltage, or the power of the inverter.

The array controller is further configured to send the control packet to the inverter through a control channel, where the control packet indicates the inverter to adjust the output power of the inverter.

Optionally, power lines corresponding to the data channel and the control channel are different.

Optionally, preambles corresponding to the data channel and the control channel are different, the data packet further includes a first preamble, and the first preamble is the preamble corresponding to the data channel.

Optionally, the preambles corresponding to the data channel and the control channel are orthogonal to each other.

Optionally, preambles corresponding to the data channel and the control channel are the same, the data packet further includes a second preamble, and the second preamble is a common preamble for the plurality of channels.

In another implementation, a data packet and a control packet are transmitted between the MPPT apparatus and the inverter through a power line. The MPPT apparatus in this embodiment may be the first node in the foregoing embodiments, and the inverter is the second node in the corresponding embodiments. The input end of the maximum power point tracking apparatus is connected to a photovoltaic string, the output end of the maximum power point tracking apparatus is connected to the inverter, the maximum power point tracking apparatus includes one or more transceivers, the one or more transceivers are configured to receive or send a packet through a plurality of physical channels established by using a plurality of power lines, and two physical channels in the plurality of physical channels respectively carry information of different priorities.

The maximum power point tracking apparatus is configured to send a data packet to the inverter through a data channel, where the data packet includes electric energy data of the maximum power point tracking apparatus, and the electric energy data includes one or more of a current or a voltage of the maximum power point tracking apparatus, specifically one or more of an output current, an output voltage, an input current, or an input voltage of the MPPT apparatus.

The maximum power point tracking apparatus is further configured to send a control packet to the inverter through a control channel, where the control packet indicates the inverter to adjust output power of the inverter or indicates the inverter to perform on/off-grid switching. The data channel and the control channel are two physical channels in the plurality of physical channels.

Optionally, power lines corresponding to the data channel and the control channel are different.

Optionally, preambles corresponding to the data channel and the control channel are different, the data packet further includes a first preamble, and the first preamble is the preamble corresponding to the data channel.

Optionally, the preambles corresponding to the data channel and the control channel are orthogonal to each other.

Optionally, preambles corresponding to the data channel and the control channel are the same, the data packet further includes a second preamble, and the second preamble is a common preamble for the plurality of channels.

Optionally, a priority of the data packet is higher than a priority of the control packet, and the maximum power point tracking apparatus is configured to skip sending the control packet while sending the data packet.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. An inverter, wherein the inverter is configured to convert an input direct current into an alternating current, and the inverter comprises one or more transceivers;
the one or more transceivers are configured to receive or send a packet through a plurality of physical channels established by using a plurality of power lines, and two physical channels in the plurality of physical channels respectively carry information of different priorities;
the inverter is configured to send a data packet to an array controller through a data channel, wherein the data packet comprises electric energy data of the inverter, and the electric energy data comprises one or more of a current, a voltage, or power of the inverter; and
the inverter is further configured to receive, through a control channel, a control packet sent by the array controller, wherein the control packet indicates the inverter to adjust output power of the inverter; and the data channel and the control channel are two physical channels in the plurality of physical channels.

2. The inverter according to claim 1, wherein power lines corresponding to the data channel and the control channel are different.

3. The inverter according to claim 1 or 2, wherein preambles corresponding to the data channel and the control channel are different, the data packet further comprises a first preamble, and the first preamble is the preamble corresponding to the data channel.

4. The inverter according to claim 3, wherein the preambles corresponding to the data channel and the control channel are orthogonal to each other.

5. The inverter according to claim 1 or 2, wherein preambles corresponding to the data channel and the control channel are the same, the data packet further comprises a second preamble, and the second preamble is a common preamble for the plurality of channels.

6. An array controller, wherein the array controller is configured to receive electric energy data reported by an inverter, and the array controller comprises one or more transceivers;
the one or more transceivers are configured to receive or send a packet through a plurality of physical channels established by using a plurality of power lines, and two physical channels in the plurality of physical channels respectively carry information of different priorities;
the array controller is configured to receive, through a data channel, a data packet sent by the inverter, wherein the data packet comprises the electric energy data of the inverter, and the electric energy data comprises one or more of a current, a voltage, or power of the inverter; and
the array controller is further configured to send a control packet to the inverter through a control channel, wherein the control packet indicates the inverter to adjust output power of the inverter; and the data channel and the control channel are two physical channels in the plurality of physical channels.

7. The array controller according to claim 6, wherein power lines corresponding to the data channel and the control channel are different.

8. The array controller according to claim 6 or 7, wherein preambles corresponding to the data channel and the control channel are different, the data packet further comprises a first preamble, and the first preamble is the preamble corresponding to the data channel.

9. The array controller according to claim 8, wherein the preambles corresponding to the data channel and the control channel are orthogonal to each other.

10. The array controller according to claim 6 or 7, wherein preambles corresponding to the data channel and the control channel are the same, the data packet further comprises a second preamble, and the second preamble is a common preamble for the plurality of channels.

11. A maximum power point tracking apparatus, wherein an input end of the maximum power point tracking apparatus is connected to a photovoltaic string, and an output end of the maximum power point tracking apparatus is connected to an inverter;
the maximum power point tracking apparatus comprises one or more transceivers;
the one or more transceivers are configured to receive or send a packet through a plurality of physical channels established by using a plurality of power lines, and two physical channels in the plurality of physical channels respectively carry information of different priorities;
the maximum power point tracking apparatus is configured to send a data packet to the inverter through a data channel, wherein the data packet comprises electric energy data of the maximum power point tracking apparatus, and the electric energy data comprises one or more of a current or a voltage of the maximum power point tracking apparatus; and
the maximum power point tracking apparatus is further configured to send a control packet to the inverter through a control channel, wherein the control packet indicates the inverter to adjust output power of the inverter or indicates the inverter to perform on/off-grid switching; and the data channel and the control channel are two physical channels in the plurality of physical channels.

12. The maximum power point tracking apparatus according to claim 11, wherein power lines corresponding to the data channel and the control channel are different.

13. The maximum power point tracking apparatus according to claim 11 or 12, wherein preambles corresponding to the data channel and the control channel are different, the data packet further comprises a first preamble, and the first preamble is the preamble corresponding to the data channel.

14. The maximum power point tracking apparatus according to claim 13, wherein the preambles corresponding to the data channel and the control channel are orthogonal to each other.

15. The maximum power point tracking apparatus according to claim 11 or 12, wherein preambles corresponding to the data channel and the control channel are the same, the data packet further comprises a second preamble, and the second preamble is a common preamble for the plurality of channels.

16. The maximum power point tracking apparatus according to claim 11 or 12, wherein a priority of the data packet is higher than a priority of the control packet, and the maximum power point tracking apparatus is configured to skip sending the control packet while sending the data packet.

17. A communication apparatus, wherein the apparatus is used in a first node, a plurality of channels are disposed on the first node, different channels in the plurality of channels respectively carry information of different priorities, and the channel is a physical channel established by using a power line; and the apparatus comprises:
a processing unit, configured to generate a first packet, wherein the first packet comprises first information; and
a transceiver unit, configured to send the first packet to a second node through a first channel, wherein the first channel is a channel that carries information of a first priority in the plurality of channels, the first priority is a priority of the first information, and the second node establishes a connection to the first node through a power line.

18. The apparatus according to claim 17, wherein power lines corresponding to different channels in the plurality of channels are different.

19. The apparatus according to claim 17 or 18, wherein preambles corresponding to different channels in the plurality of channels are different, the first packet further comprises a first preamble, and the first preamble is a preamble corresponding to the first channel.

20. The apparatus according to claim 19, wherein the preambles corresponding to different channels in the plurality of channels are orthogonal to each other.

21. The apparatus according to claim 17 or 18, wherein preambles corresponding to different channels in the plurality of channels are the same, the first packet further comprises a second preamble, and the second preamble is a common preamble for the plurality of channels.

22. The apparatus according to any one of claims 17 to 21, wherein the processing unit is further configured to determine the first priority based on a priority of the second node and one or more of a delay requirement, a quality of service QoS level, an information type, and a preset priority that correspond to the first information.

23. The apparatus according to claim 22, wherein that the processing unit determines the first priority based on a priority of the second node and one or more of a delay requirement, a quality of service QoS level, an information type, and a preset priority that correspond to the first information comprises:
determining the first priority based on the delay requirement and the information type that correspond to the first information.

24. The apparatus according to any one of claims 17 to 23, wherein the processing unit is further configured to:
when a second packet is sent through a second channel, and a priority corresponding to the second channel is lower than a priority corresponding to a first channel, suspend sending of the second packet; and
resume sending of the second packet after the first packet is successfully sent.

25. The apparatus according to any one of claims 17 to 24, wherein the transceiver unit is further configured to:
when a third node exists in the second node, and a packet from the third node is received in a first time period after the first packet is sent, retransmit the first packet to the second node through the first channel, wherein the third node is a node that operates in a half-duplex mode, and the first time period is less than or equal to a time threshold.

26. A communication apparatus, wherein the apparatus is used in a second node, a plurality of channels are disposed on the second node, different channels in the plurality of channels respectively carry information of different priorities, and the channel is a physical channel established by using a power line; and the apparatus comprises:
a transceiver unit, configured to receive a first packet from a first node through a first channel, wherein the first channel is a channel that carries information of a first priority in the plurality of channels, the first packet comprises first information, the first priority is a priority of the first information, and the first node establishes a connection to the second node through a power line; and
a processing unit, configured to process the first information.

27. The apparatus according to claim 26, wherein power lines corresponding to different channels in the plurality of channels are different.

28. The apparatus according to claim 26 or 27, wherein preambles corresponding to different channels in the plurality of channels are different, the first packet further comprises a first preamble, and the first preamble is a preamble corresponding to the first channel.

29. The apparatus according to claim 28, wherein the preambles corresponding to different channels in the plurality of channels are orthogonal to each other.

30. The apparatus according to claim 26 or 27, wherein preambles corresponding to different channels in the plurality of channels are the same, the first packet further comprises a second preamble, and the second preamble is a common preamble for the plurality of channels.

31. The apparatus according to any one of claims 26 to 30, wherein the first priority is determined based on a priority of the second node and one or more of a delay requirement, a quality of service QoS level, an information type, and a preset priority that correspond to the first information.

32. The apparatus according to claim 31, wherein that the first priority is determined based on a priority of the second node and one or more of a delay requirement, a QoS level, an information type, and a preset priority that correspond to the first information comprises: the first priority is determined based on the delay requirement and the information type that correspond to the first information.

33. A communication apparatus, wherein a plurality of channels are disposed on the apparatus, different channels in the plurality of channels respectively carry information of different priorities, and the channel is a physical channel established by using a power line; and the apparatus comprises a processor, a memory, a plurality of transceivers, and/or a plurality of couplers, wherein the plurality of channels one-to-one correspond to the plurality of transceivers, the plurality of transceivers one-to-one correspond to the plurality of couplers, each of the plurality of transceivers is configured to: receive information from a communication apparatus other than the communication apparatus, and send information to the communication apparatus other than the communication apparatus, each of the plurality of couplers is configured to couple, to a power line corresponding to a corresponding channel, information sent by the corresponding transceiver in the plurality of transceivers to the communication apparatus other than the communication apparatus, and the processor invokes a computer program stored in the memory to implement the method according to any one of claims 1 to 16.
